# EUROPÄISCHE PATENTSCHRIFT

(11) **EP 4 667 176 B1**
(45) Veröffentlichungstag und Bekanntmachung des Hinweises auf die Patenterteilung: **21.10.2026**
(21) Anmeldenummer: 25215161.8
(22) Anmeldetag: 20.12.2021
(51) Int. Cl.: B29C 44/34, B29B 7/80, B29B 7/60, B29B 7/74, B29B 7/58, B29B 7/40, B29C 44/60

(54) **VERFAHREN ZUM VORZUGSWEISE DISKONTINUIERLICHEN AUSDOSIEREN EINES GESCHÄUMTEN ODER AUFSCHÄUMBAREN KUNSTSTOFFES MIT DIREKTER GASBELADUNG**
METHOD FOR THE PREFERABLY DISCONTINUOUS METERING OF A FOAMED OR FOAMABLE PLASTIC WITH DIRECT GAS LOADING
PROCÉDÉ DE DOSAGE, DE PRÉFÉRENCE DISCONTINU, D'UNE MATIÈRE PLASTIQUE EXPANSÉE OU MOUSSABLE, AVEC CHARGEMENT DIRECT EN GAZ

(43) Veröffentlichungstag der Anmeldung: 24.12.2025
(62) Dokumentnummer(n) der früheren Anmeldung(en) nach Art. 76 EPÜ: 21215933.9 / 4 197 735
(73) Patentinhaber: Henkel AG & Co. KGaA, 40589 Düsseldorf (DE)
(72) Erfinder: Metzler, Mario, 6840 Götzis (AT); Baldauf, Guenter, 6914 Hohenweiler (AT); Schneider, Pascal, 6900 Möggers (AT)

(56) Entgegenhaltungen:
- EP-A1- 1 186 391
- EP-A1- 1 287 964
- WO-A1-2017/004637
- DE-A1- 102018 213 484
- JP-A- 2003 305 757
- US-A1- 2018 339 439
- US-A1- 2021 178 648

## Beschreibung

Die Erfindung betrifft ein Verfahren zum vorzugsweise diskontinuierlichen Ausdosieren eines geschäumten oder aufschäumbaren Kunststoffes.

Der WO 2017/004637 A1 offenbart ein Verfahren zum diskontinuierlichen Ausdosieren eines geschäumten oder aufschäumbaren Kunststoffes. Dabei wird in eine Mischkammer einer Mischvorrichtung als eine erste Komponente ein Gemisch aus Polyol und Wasser und als eine zweite Komponente Isocyanat geleitet. In der Mischkammer ist eine um Rührer drehbar angeordnet. Durch die Vermischung und der chemischen Reaktion der beiden Komponenten entsteht Polyurethan, das aus der Mischkammer durch eine Ausgangsdüse diskontinuierlich ausdosiert werden kann. Aufgrund des Wassers entsteht bei der chemischen Reaktion zu Polyurethan Kohlendioxid (CO₂), das als Treibgas für die Aufschäumung des Polyurethans dient.

Darüber hinaus ist in der WO 2017/004637 A1 offenbart, das Polyol vor dem Eintritt in die Mischkammer mit Luft zu beladen. Diese Luftkonditionierung (Einbringen, Lösen, Homogenieren) erfolgt in Drucktanks, wofür in der Regel ein Zeitaufwand von mehreren Stunden bis zu wenigen Tagen notwendig sein kann. Die Luft begünstigt dabei die angestrebte Schaumstruktur des Polyurethans. Die Luft ist dabei in der Regel in dem Polyol gelöst und perlt aus, wenn aufgrund des Druckabfalls beim Eintritt in die Mischkammer das Gemisch aus Polyol und Luft unterhalb des Sättigungsdrucks der gelösten Luft gelangt. Es entstehen kleine Mikroblasen, die Keime für die Schaumstoffzellen darstellen, die durch das Treibgas gebildet werden. Die Qualität der Schaumstruktur hängt dabei von vielen Parametern wie dem Druck und der Temperatur in der Mischkammer ab. Beim diskontinuierlichen Ausdosieren kann es in der Mischkammer zu unerwünschten Druckschwankungen kommen, was die Bereitstellung einer gleichmäßigen Schaumstruktur schwierig macht. Der gesamte Vorgang ist sehr empfindlich und aufwendig einzurichten, da sowohl der Druck in der Mischkammer und die gelöste Gasmenge im Polyol genau aufeinander abgestimmt werden müssen. Kleine Druckänderungen können bereits zu signifikanten Änderungen der Schaumstruktur am Endprodukt führen, welches durch das Ausdosieren erzeugt wird. Das aus der WO 2017/004637 A1 bekannte Verfahren läuft daher meist nur in einem engen Prozessfenster stabil ab.

Die EP 1 186 391 A1 offenbart ein Verfahren gemäß dem Oberbegriff des Anspruchs 1.

Der Erfindung liegt daher die Aufgabe zu Grunde, ein Verfahren zum vorzugsweise diskontinuierlichen Ausdosieren eines geschäumten oder aufschäumbaren Kunststoffes bereitzustellen, das stabil abläuft und zu gleichbleibend guten Schaumqualitäten des geschäumten oder aufschäumbaren Kunststoffes führt.

Die der Erfindung zu Grunde liegende Aufgabe wird mit der Merkmalskombination gemäß Anspruch 1 gelöst. Ausführungsbeispiele der Erfindung können den von Anspruch 1 abhängigen Ansprüchen entnommen werden.

Erfindungsgemäß ist vorgesehen, dass in der Mischkammer ein Druck in einem Bereich von 0,2 bar bis 15 bar, vorzugsweise in einem Bereich von 0,5 bar bis 5 bar vorliegt, wobei das Gas durch eine Ventilvorrichtung in die erste Komponente vorzugsweis direkt in die Mischkammer injiziert wird, Der Injektionsdruck des Gases ist dabei entsprechend höher zu wählen, als der Druck in der Mischkammer, um eine Injektion zu ermöglichen. Unter dem Injektionsdruck ist dabei der Druck in der Ventilvorrichtung zu verstehen aus der das Gas über einen Auslass ausgegeben wird. Vorzugsweise wird das Gas mit einem Injektionsdruck im Bereich von 0,5 bar bis 60 bar, besonders bevorzugt in einem Bereich von 0,5 bar bis 30 bar, ganz besonders bevorzugt in einem Bereich von 2 bar bis 20 bar und dabei vorzugsweise direkt in die Mischkammer in die erste Komponente injiziert, wobei in der Mischkammer der Rührer das Gas in der ersten Komponente zerteilt. Vorzugsweise wird die Ventilvorrichtung bei einem Dosiervorgang geöffnet und zwischen zwei Dosiervorgängen verschlossen. Bevorzugt wird das Gas direkt in die Mischkammer injiziert. Es sind aber auch Lösungen denkbar, bei denen das Gas bereits vorzugsweise unmittelbar vor dem Erreichen der ersten Komponente der Mischkammer in diese erste Komponente injiziert wird und sodann zusammen mit der ersten Komponente in die Mischkammer gelangt.

Mit dem erfindungsgemäßen Verfahren wird das Gas (vorzugsweise Luft oder Stickstoff oder Kohlendioxid) vorzugsweisedirekt in die Mischkammer injiziert. Aufgrund der direkten Gasbeladung kann auf die vorgelagerte Gasbeladung in separaten Drucktanks verzichtet bzw. der Umfang der vorgelagerten Gasbeladung reduziert werden. Durch die direkte Gasbeladung kann der Druck in der Mischkammer gegenüber einer reinen vorgelagerten Gasbeladung erhöht werden, so dass andere Ausgangsdüsen (längere Düsen oder Düsen mit geringerem Innendurchmesser) zum Ausdosieren verwendet werden können. Zudem kann viel schneller auf etwaige Veränderungen der Produktionsparameter (Ausbringmenge, Viskosität, Temperatur etc.) im Vergleich zu dem bekannten Verfahren reagiert werden, bei dem die Gasbeladung vollständig vorgelagert ist und zeitlich getrennt von dem eigentlichen Ausdosieren ist.

Durch das erfindungsgemäße Verfahren wird zumindest ein signifikanter Anteil des für die Aufschäumung benötigten Gases erst dann injiziert, wenn der aufgeschäumte oder aufschäumbare Kunststoff ausdosiert wird. Die injizierte Gasmenge während eines Dosiervorgangs entspricht dabei der Gasmenge bzw. füllt die Gasmenge bis zu dem Niveau auf, die für die in diesem Dosiervorgang auszubringende Kunststoffmenge benötigt wird. Das erfindungsgemäße Verfahren schließt aber nicht aus, dass ein Teil des benötigten Gases bereits in einer vorgelagerten Gaskonditionierung der ersten Komponente zugeführt worden ist

Erfindungsgemäß wird in die Mischkammer eine zweite Komponente geleitet, wobei zwischen der ersten Komponente und der zweiten Komponente eine chemische Reaktion stattfindet. Ein Beispiel dafür ist die Herstellung von Polyurethan (PU), das durch die chemische Reaktion von Polyol und Isocyanat entsteht.

Bei der chemischen Reaktion kann, wie oben bereits am Beispiel von Polyol, Wasser und Isocyanat beschrieben, ein Treibgas freigesetzt werden, welches für die Bildung der Schaumstoffzellen notwendig sein kann.

Erfindungsgemäß wird die erste Komponente mit der zweiten Komponente vermischt, nachdem die Zerteilung des Gases in der ersten Komponente stattgefunden hat. Dieses 2-stufige Verfahren hat den Vorteil, dass unterschiedliche Prozessparameter eingestellt werden können, einerseits das Gas in der ersten Komponente zu zerteilen oder zu zerschlagen und andererseits eine optimale Vermischung zwischen der ersten Komponente mit den darin enthaltenen kleinen Mikroblasen) und der zweiten Komponente zu erreichen.

Als Sollgröße für einen Volumenstrom des injizierten Gases bei Umgebungsdruck kann eine Funktion verwendet werden, die von dem Produkt aus dem Druck in der Mischkammer und der Ausbringmenge des Kunststoffes pro Zeiteinheit abhängig ist. Es kann sich hier um eine lineare Abhängigkeit handeln. Beispielsweise kann die Sollgröße für den Volumenstrom des Gases ermittelt werden durch die Funktion: ${F}_{ind} = m \times \left({P}_{MK}\times {M}_{Aus}\right) - {F}_{alt}$ wobei
- F_{ind} die Sollgröße des Volumenstrom des injizierten Gases in cm³/s,
- m die Steigung in cm³/s,
- P_{MK} der entdimensionierte Wert des Druckes in der Mischkammer in bar,
- M_{Aus} der entdimensionierte Wert der Ausbringmenge in g/s,
- Fₐₗₜ der Volumenstrom des bereits in der ersten Komponente gelösten Gases in cm³/s, ist.

Bevorzugt ist der Volumenstrom des in die Mischkammer injizierten Gases bei Umgebungsdruck gleich oder größer, als der mittels der Funktion ermittelte Wert F_{ind}. Die Funktion zur Ermittlung des Wertes F_{ind} kann bei der Regelung vorzugsweise als untere Grenze für den zu injizierenden Volumenstrom verwendet werden.

In der Funktion ist dem Umstand Rechnung getragen worden, dass bei der Festlegung des Wertes F_{ind} zu berücksichtigen ist, dass neben der direkten Gasbeladung die erste Komponente (oder bei dem Einsatz mehrerer Komponenten zumindest eine der Komponenten) bereits teilweise ein Gas enthalten kann. Dieser Wert ist als Fₐₗₜ angegeben und kann mittels unterschiedlicher Möglichkeiten ermittelt werden. Denkbar ist insbesondere eine Dichtemessung der ersten Komponente in der Mischkammer ohne injiziertes Gas und ein Vergleich der Dichte in einem entsprechenden Datenblatt für diese Komponente. Hierdurch ist auf einfache Weise bei einem Unterschied die Gasbeladung und somit der bereits zugeführte Volumenstrom Fₐₗₜ bestimmbar. Eine weitere Möglichkeit ist der Vergleich der Dichte der ersten Komponente in der Mischkammer ohne injiziertes Gas mit derselben ersten Komponente in der Mischkammer ohne injiziertes Gas nach dem Beaufschlagen mit einem Vakuum. Auch so lässt sich auf einfache Weise die Gasbeladung und somit der bereits zugeführte Volumenstrom Fₐₗₜ ermitteln. Dieser beispielsweise mittels der genannten Möglichkeiten ermittelte, bereits zugeführte Volumenstrom Fₐₗₜ ist dann von dem Wert für das fertige, aus der Mischkammer auszugebene Produkt benötigte Volumenstrom F_{gesamt,,} abzuziehen. Dabei kann F_{gesamt} mittels der Funktion ${F}_{gesamt ,} = \left(m\times \left({P}_{MK}\times {M}_{Aus}\right)\right)$ berechnet werden. Nach Abzug des bereits in der ersten Komponente enthaltenen Volumenstroms Fₐₗₜ, kann also der zu injizierenden Volumenstrom F_{ind}ermittelt werden.

Die Steigung ist vorzugsweise durch Versuchsreihen an dem ausdosierten Kunststoff ermittelbar. Beispielsweise kann durch eine Vielzahl von Versuchen mit unterschiedlichen Steigungen ermittelt werden, ab welchem Bereich der ausdosierte Kunststoff den Anforderungen nicht mehr genügt. Dies kann insbesondere durch Inaugenscheinnahme des ausdosierten Produktes und Vergleich der ausdosierten Produkte besagter Versuche erfolgen oder auch durch andere sich eignende Begutachtungsmöglichkeiten.

Bevorzugt liegt die Steigung beispielsweise für ein Polyurethan (PU) in einem Bereich von 0,010 cm³/s bis 0,09 cm³/s, besonders bevorzugt in einem Bereich von 0,014 cm³/s bis 0,022 cm³/s, wobei die Ausbringmenge dabei vorzugsweise im Bereich von 0,2 g/s - 120 g/s, ganz besonders bevorzugt im Bereich von 0,2 g/s bis 70 g/s liegt.

Bevorzugt liegt die Steigung beispielsweise für ein Silikon in einem Bereich von 0,060 cm³/s bis 0,269 cm³/s, besonders bevorzugt in einem Bericht von 0,075 cm³/s bis 0,105 cm³/s, wobei die Ausbringmenge dabei vorzugsweise im Bereich von 0,2 g/s - 120 g/s, ganz besonders bevorzugt im Bereich von 0,2 g/s bis 10 g/s liegt.

Vorzugsweise kann die Mischkammer bei einem Dosiervorgang geöffnet und zwischen zwei Dosiervorgängen verschlossen werden, insbesondere um ein diskontinuierliches Ausdosieren eines geschäumten oder aufschäumbaren Kunststoffes mit direkter Gasbeladung zu ermöglichen. Ein Verschließen der Mischammer ist insbesondere mittels eines innerhalb der Mischkammer in axiale Richtung verschiebbar angeordneten Rührers denkbar. Dieser kann zum Verschließen beispielsweise eine axiale Schließposition einnehmen, bei der die Auslassöffnung der Mischkammer verschlossen wird. Selbstverständlich sind auch andere Möglichkeiten denkbar, die ein Verschließen der Mischkammer ermöglichen.

Idealerweise wird sowohl die Mischkammer als auch die Ventilvorrichtung bei einem Dosiervorgang geöffnet und zwischen zwei Dosiervorgängen verschlossen.

In einer bevorzugten Ausführungsform wird die Ventilvorrichtung bei einem Dosiervorgang geöffnet und zwischen zwei Dosiervorgängen verschlossen. Dies kann beispielsweise durch ein Druckregelventil als Bestandteil der Ventilvorrichtung erfolgen, welches einen Soll-Durchfluss null gestellt wird. Dadurch, dass die Ventilvorrichtung zwischen zwei Dosiervorgängen geschlossen werden kann, kann einerseits verhindert werden, dass in der Pause zwischen den zwei Dosiervorgängen zu viel Gas in die Mischkammer gelangt, was für die angestrebte gleichmäßige Schaumstruktur abträglich wäre. Zudem kann andererseits verhindert werden, dass Material aus der Mischkammer in die Ventilvorrichtung unbeabsichtigt eintritt und dort zu Verunreinigungen und Beschädigungen führt.

Die Ventilvorrichtung kann ein Druckregelventil und ein Durchflussregler umfassen, wobei ein Ausgang des Durchflussreglers mit einem Einlass des Druckregelventils und ein Auslass des Druckregelventils mit der Mischkammer verbunden sind.

Das Druckregelventil ist vorzugsweise als Nadelventil ausgeführt, das eine Ventilkammer, eine in der Ventilkammer verschiebbare Nadel und eine mit der Nadel gekoppelte Kolbeneinheit aufweist. Unter einem Nadelventil ist dabei ein Regelventil zu verstehen, bei dem durch Axialbewegung eines beispielsweise nadelartigen Stellgliedes ein Regelspalt beeinflusst wird. Durch die Kolbeneinheit lässt sich in Abhängigkeit eines Drucks in der Ventilkammer eine axiale Position der Nadel festlegen.

Durch das Druckregelventil ist es möglich, dass am Ausgang des Durchflussreglers, der über den Einlass des Druckregelventils mit dessen Ventilkammer verbunden ist, ein konstanter Druck herrscht, welcher weitestgehend von dem Mischkammerdruck unabhängig ist. Wenn auch an einem Einlass des Durchflussreglers Mittel vorgesehen sind, den dort herrschenden Druck konstant zu halten, liegen beim Durchflussregler am Ein- und Auslass konstante Druckverhältnisse vor, wodurch die Bereitstellung eines sehr genauen Durchflusses möglich ist. Insgesamt kann so die Ventilvorrichtung eine sehr genaue Luftmenge pro Zeiteinheit bereitstellen. Mit dieser genau eingestellten Luftmenge lassen sich in der Mischkammer Kunststoffe mit einer guten und gleichbleibenden Schaumstruktur herstellen.

Der Durchflussregler ist vorzugsweise als Massendurchflussregler (MFC mass flow control) ausgebildet. Er ermittelt den Massendurchfluss, sodass Schwankungen in Druck und Temperatur keinen Einfluss auf das Regelungsergebnis haben.

Als Messaufnehmer des Massendurchflussreglers kommt vorzugsweise ein kalorimetrischer Durchflussmesser zum Einsatz.

Die Kolbeneinheit kann einen Druckführungskolben und einen Schließkolben aufweisen. Der Druckführungskolben dient dabei der Druckregelung. Auf den Druckführungskolben kann einerseits eine erste Kraft wirken, die von dem Druck in der Ventilkammer abhängig ist. Vorzugsweise ist die erste Kraft proportional zu dem in der Ventilkammer herrschenden Druck. Andererseits wirkt auf den Druckführungskolben eine zweite Kraft, die sich über Einstellmittel exakt einstellen lässt. Befindet sich der Druckführungskolben im Gleichgewicht, wird die Nadel in der Ventilkammer nicht verschoben und steht still. Ist der Ventilkammerdruck zu klein, bewegt sich der Druckführungskolben in eine Richtung und damit die mit ihm gekoppelte Nadel, wodurch sich die Strömungsverhältnisse im Druckregelventil derart ändern, dass der Ventilkammerdruck wieder ansteigt. Der Druckführungskolben bewegt sich daraufhin wieder in die andere Richtung, bis ein Gleichgewicht der ersten Kraft und der zweiten Kraft hergestellt ist. Dadurch lässt sich der Ventilkammerdruck regeln, dessen Höhe oder Sollwert von der eingestellten zweiten Kraft abhängt. Durch den Schließkolben lässt sich das Nadelventils verschließen. Vorzugsweise lässt sich somit das Nadelventil unabhängig von dem Ventilkammerdruck schließen.

Zwischen dem Druckführungskolben und einem verstellbaren Widerlager kann ein Federelement angeordnet sein. Beispielsweise kann es sich bei dem Federelement um eine Schraubenfeder handeln. Durch das Verstellen des Widerlagers wird der Abstand zwischen Druckführungskolben und Widerlager verändert, sodass die Schraubenfeder mehr oder weniger zusammengedrückt wird. Entsprechend ändert sich die Kraft, die das Federelement bzw. die Schraubenfeder auf den Druckführungskolben ausübt. Alternativ zum Federelement oder zur Schraubenfeder kann die einstellbare zweite Kraft auch durch andere Mittel wie beispielsweise Pneumatik bereitgestellt werden.

In einem Ausführungsbeispiel drückt in einer Schließposition der Nadel der Schließkolben gegen den Druckführungskolben, der wiederum gegen die Nadel drückt und diese in der Schließposition hält. Die Kraft, mit der der Schließkolben gegen den Druckführungskolben drückt, ist vorzugsweise deutlich größer als die Kraft (Faktor 2 oder mehr), die durch das oben beschriebene Federelement auf den Druckführungskolben herrscht. Somit lässt sich das Nadelventil schnell und zuverlässig durch den Schließkolben schließen.

Eine Feder kann den Schließkolben in eine Ruheposition drücken, in der der Schließkolben und der Druckführungskolben voneinander entkoppelt sind. In der Ruheposition des Schließkolbens wirken somit auf den Durchführungskolben keine Kräfte, die auf den Schließkolben zurückzuführen sind.

Die Nadel, der Druckführungskolben und der Schließkolben können koaxial zueinander angeordnet sein. Zudem kann auch das verstellbare Widerlager koaxial zum Druckführungskolben angeordnet sein. Das verstellbare Widerlager ist vorzugsweise eine Schraubhülse, deren axiale Position über ein Schraubgewinde durch eine Drehbewegung eingestellt werden kann. Dadurch ist eine sehr genaue Einstellung der axialen Position des Widerlagers und somit des Drucks in der Ventilkammer möglich.

In einem Ausführungsbeispiel ist die Ventilkammer durch eine Membran begrenzt, welche zwischen der Nadel und der Kolbeneinheit angeordnet ist. Die Membran ermöglicht eine gute Abdichtung der Ventilkammer von der Kolbeneinheit. Die Membran kann eine spezielle Wellenstruktur aufweisen, die für einen guten Sitz und eine gute Abdichtung sorgen. In einer alternativen Ausführungsform ist eine Klemmung für die Membran vorgesehen. Dadurch wird die Membran gewellt, um für einen guten Sitz und eine gute Abdichtung zu ermöglichen.

Die Nadel ist vorzugsweise mit der Kolbeneinheit durch Magnetkraft gekoppelt. Dabei können an zwei gegenüberliegenden Seiten der Membran Magnete angeordnet sein, wobei die Magnetkraft durch die Membran wirkt. Zur Befestigung der Nadel an der Kolbeneinheit ist es daher nicht notwendig, die dazwischen liegende Membran zu durchstoßen. Damit wird die Gefahr reduziert, dass die Membran undichte Stellen aufweist. Selbstverständlich ist auch der Einsatz eines Magneten an der einen Seite und eines ferromagnetischen Gegenstückes auf der gegenüberliegenden Seite denkbar.

In einem Ausführungsbeispiel ist die Nadel aus Kunststoff, vorzugsweise aus PEEK. Dadurch ist eine gute Abdichtung zwischen Nadel und einem Ventilgehäuse, das die Ventilkammer begrenzt, möglich, wenn sich die Nadel in ihrer Schließposition befindet. Insbesondere ist dann nicht möglich, das Material, welches sich in der Mischkammer befindet, in das Druckregelventil eindringen kann.

Ein Volumen zwischen dem Ausgang des Durchflussreglers und dem Ausgang des Druckregelventils kann kleiner als 5 cm³, vorzugsweise kleiner als 1 cm³ sein. Dadurch lassen sich schädliche Kompressibilitätseffekte des (Gas-)Volumens gering halten, welche die genaue Regelung der injizierten Luftmenge erschweren.

Zwischen dem Auslass des Durchflussreglers und dem Einlass des Druckregelventils kann ein Rückschlagventil vorgesehen sein. Das Rückschlagventil verhindert, dass bei einem defekten Druckregelventil Material aus der Mischkammer in den üblicherweise sehr sensiblen Durchflussregler gelangt.

Vor dem Einlass des Durchflussreglers kann eine Boostereinheit vorgesehen sein, der den Luftdruck eines üblichen Druckluftversorgungsnetzes von etwa 5 bis 7 bar auf ca. 7 bis 30 bar verdichtet. Um etwaige Druckschwankungen, welche im Betrieb der Boostereinheit entstehen können, kann ein großes Puffervolumen zwischen Boostereinheit und dem Eingang des Durchflussreglers vorgesehen sein. Das große Puffervolumen lässt sich beispielsweise durch Schlauchstücke mit einem übergroßen Durchmesser und großer Länge erreichen.

Die Mischvorrichtung kann eine Strömungsbremse aufweisen, durch die die Mischkammer in einen ersten Mischbereich und in einen zweiten Mischbereich getrennt wird.

Die Strömungsbremse kann eine Drossel umfassen, wobei in dem ersten Mischbereich ein - wenn auch nur im geringfügigen Maße - höherer Druck herrscht als im zweiten Mischbereich. Dadurch wird verhindert, dass die zweite Komponente, beispielsweise Isocyanat, in den ersten Mischbereich gelangt und dort zu unerwünschten chemischen Reaktionen oder Verunreinigungen führt. Durch die Drossel gelangt dann das Vorgemisch (aus erster Komponente und Gas) in den zweiten Mischbereich, um mit der zweiten Komponente vermischt zu werden. Das Gemisch aus Vorgemisch und zweiter Komponente verlässt dann durch die Auslassöffnung die Mischkammer.

Die Drossel kann durch einen radialen Spalt zwischen einer Mischkammerwandung und dem Rührer gebildet werden. Vorzugsweise ist der Rührer im Wesentlichen rotationssymmetrisch aufgebaut. Er kann einen Wellenbund aufweisen, wobei sich der radiale Spalt zwischen Wellenbund und der Mischkammerwandung erstrecken kann. Im Falle eines rotationssymmetrischen Rührers kann der Wellenbund einen kreisrunden Querschnitt mit einem Außendurchmesser aufweisen. Die Mischkammer kann im Wesentlichen zylinderförmig ausgebildet sein und eine zylindrische Mantelfläche mit kreisrundem Querschnitt aufweisen. Ein Innendurchmesser der zylindrischen Mantelfläche ist dabei etwas größer als der Außendurchmesser des Wellenbunds. In axialer Richtung kann sich der Wellenbund einige Millimeter erstrecken, beispielsweise 2 bis 15 mm. Vorzugsweise sind Rührer und zylinderförmige Mischkammer koaxial zueinander ausgerichtet, so dass sich im Falle eines glatten Wellenbunds ein radialer Spalt einstellt, der in Umfangsrichtung konstant groß ist. Der radiale Spalt kann kleiner als 0,5 mm und gar kleiner als 0,1 mm sein.

Die Dimensionen der Mischkammer und des Rührers hängen von der erforderlichen Ausbringmenge (Gewicht/Zeiteinheit) des bereitzustellenden Kunststoffes ab. Übliche Werte für die Ausbringmenge bewegen sich in einer Spanne von 0,05 g/s bis 120 g/s. Die Mischkammer kann beispielsweise eine axiale Länge von 12 mm bis 25 cm haben. Der Innendurchmesser einer zylinderförmigen Mischkammer kann Werte von 6 mm bis 30 mm aufweisen.

In einem Ausführungsbeispiel lässt sich der Rührer innerhalb der Mischkammer in axialer Richtung verschieben. Es kann dabei bevorzugt eine axiale Schließposition einnehmen, durch die die Auslassöffnung der Mischkammer verschlossen wird. Wird der Rührer wieder aus dieser Schließposition verschoben, öffnet sich die Auslassöffnung, sodass der Kunststoff aus der Mischkammer ausdosiert werden kann.

Die Auslassöffnung kann im Wesentlichen koaxial zur Drehachse des Rührers angeordnet sein, wobei die axiale Schließposition eine axiale Endposition des Rührers darstellen kann. So kann die Mischkammer einen konisch zulaufenden Endbereich mit dazu mittig angeordneten Auslassöffnung aufweisen. Der Rührer kann in seiner Schließposition auf diesen Endbereich aufsetzen und somit die Auslassöffnung verschließen. Wenn der Rührer dann leicht aus dieser Schließposition bewegt wird, öffnet sich ein Auslassspalt zwischen Rührer und dem konisch zulaufenden Endbereich. Durch diesen Auslassspalt gelangt dann der Kunststoff zu der Auslassöffnung.

In einem Ausführungsbeispiel wird die axiale Position des Rührers genutzt, den Strömungsquerschnitt eines beliebig geformten, der Auslassöffnung vorgeschalteten Auslassspalts zwischen axial verschiebbaren Rührer und Mischkammer einzustellen, um somit den Druck in der Mischkammer zu beeinflussen bzw. zu regeln. So könnte dieses Ausführungsbeispiel auch ohne konisch zulaufenden Endbereich ausgeführt sein. Zudem ist es auch nicht zwingend, dass die Schließposition eine axiale Endposition ist.

Der erste Abschnitt des Rührers und der zweite axiale Abschnitt des Rührers sind vorzugsweise drehfest miteinander verbunden. Dies führt zu einem vergleichsweise einfach aufgebauten Rührer, der vorzugsweise einstückig ausgebildet ist oder aus nur zwei oder drei fest miteinander verbundenen Teilen zusammengesetzt ist. Die axialen Abschnitte des Rührers drehen sich somit mit gleicher Drehgeschwindigkeit in der Mischkammer.

In einem Ausführungsbeispiel unterscheiden sich am ersten Abschnitt des Rührers angeordnete erste Mittel zum Mischen von am zweiten Abschnitt des Rührers angeordneten zweiten Mitteln zum Mischen. Dadurch wird dem Umstand Rechnung getragen, dass sich in dem ersten Mischbereich die Anforderungen und die Zielvorgaben von denen des zweiten Mischbereichs unterscheiden. Während im ersten Mischbereich das Gas fein zerteilt, geschlagen bzw. in der ersten Komponente fein verteilt werden soll, sollen im zweiten Mischbereich die erste Komponente (mit dem darin befindlichen Gas) und die zweite Komponente miteinander vermischt werden.

Die ersten Mittel des ersten axialen Abschnitts des Rührers und/oder die weiteren Mittel des zweiten Abschnitts des Rührers können mehrere Reihen von sich in radialer Richtung erstreckende Vorsprünge oder radiale Zacken aufweisen, wobei sich die Reihen im Wesentlichen in axialer Richtung erstrecken können. In einem Ausführungsbeispiel verlaufen die Reihen geradlinig und parallel zur Drehachse des Rührers. Die Reihen können jedoch auch zur Drehachse um einen Neigungswinkel geneigt sein, sodass bei Drehung des Rührers eine axiale Strömung gefördert wird. Der Neigungswinkel im ersten axialen Abschnitt kann von dem Neigungswinkel des zweiten axialen Abschnitts verschieden sein. Beispielsweise ist es denkbar, dass im ersten axialen Abschnitt der Neigungswinkel 0° beträgt, während im zweiten axialen Abschnitt der Neigungswinkel von 0° verschieden ist (beispielsweise 5 bis 15°), um die zweite Komponente vom Überströmen in den ersten axialen Bereich zusätzlich zur Strömungsbremse abzuhalten.

Ein radialer Vorsprung/Zacken einer Reihe kann in axialer Richtung zu einem radialen Vorsprung einer benachbarten Reihe versetzt sein. Dadurch lässt sich eine bessere Vermischung bzw. eine bessere Zerteilung des Gases erreichen.

Wenn sowohl im ersten axialen Abschnitt und im zweiten axialen Abschnitt des Rührers Reihen mit radialen Vorsprüngen vorgesehen sind, können die radialen Vorsprünge des zweiten Abschnitts weiter voneinander beabstandet sind als die radialen Vorsprünge des ersten Abschnitts. Auch können die radialen Vorsprünge des zweiten axialen Abschnitts größer ausgebildet sein als die radialen Vorsprünge des ersten axialen Abschnitts. Durch diese Maßnahme lässt sich eine feinere Vermischung oder Zerteilung in dem ersten Mischbereich erreichen.

Allgemein gesprochen weisen die ersten Mittel des ersten axialen Abschnitts eine höhere Teilungszahl als die zweiten Mittel des zweiten axialen Abschnitts auf. Eine höhere Teilungszahl bedeutet dabei, dass pro Flächeneinheit mehr Vorsprünge oder Zacken vorgesehen sind.

Die radialen Vorsprünge können jeweils eine Querschnittsfläche aufweisen, die sich in radialer Richtung gesehen ändert. In radialer Richtung gesehen können so die Vorsprünge nach außen hin spitz zulaufen oder sich auch erweitern.

Die ersten Mittel des ersten axialen Abschnitts des Rührers und/oder die zweiten Mittel des zweiten Abschnitts des Rührers können jeweils mehrere Schaufeln aufweisen, durch die Material, das durch die Zentrifugalkraft nach außen gedrückt wird, radial nach innen geleitet wird. Dies begünstigt eine gute und homogene Vermischung bzw. Zerteilung des Gases.

Um weitere Mischungseffekte zu erzielen, können die Schaufeln kleine Öffnungen aufweisen. Bei Drehung des Rührers wird somit ein Teil des von einer Schaufel erfassten Materials durch die kleinen Öffnungen gepresst.

Das bevorzugte diskontinuierliche Ausdosieren soll dabei die Fälle abdecken, bei denen für ein begrenztes Zeitinterwall beispielsweise von wenigen Sekunden der Kunststoff vorzugsweise mit einer konstanten Ausbringung (Gewicht/Zeiteinheit) ausdosiert wird. Einer solchen Ausdosierung kann eine Pause folgen, in der kein Kunststoff ausdosiert wird. Das diskontinuierliche Ausdosieren kann somit eine Folge von unterschiedlichen langen Dosiervorgängen und dazwischen angeordneten, unterschiedlichen langen Dosierpausen sein. Es ist auch möglich, dass die Ausbringung innerhalb eines Dosiervorgangs oder von Dosiervorgang zu Dosiervorgang variiert.

Anhand der in der Zeichnung dargestellten Ausführungsbeispiele wird die Erfindung näher erläutert. Es zeigen:
- Figur 1: eine Kunststoff-Dosiervorrichtung, mit der das erfindungsgemäße Verfahren durchgeführt werden kann;
- Figur 2: eine Mischvorrichtung der Kunststoff-Dosierungvorrichtung;
- Figur 3: ein Druckregelventil als Teil einer erfindungsgemäßen Ventilvorrichtung.
- Figur 4: einen Rührer der Mischvorrichtung der Figur 2;
- Figur 5: einen weiteren Rührer; und
- Figur 6: drei Varianten für einen ersten axialen Abschnitt des Rührers.

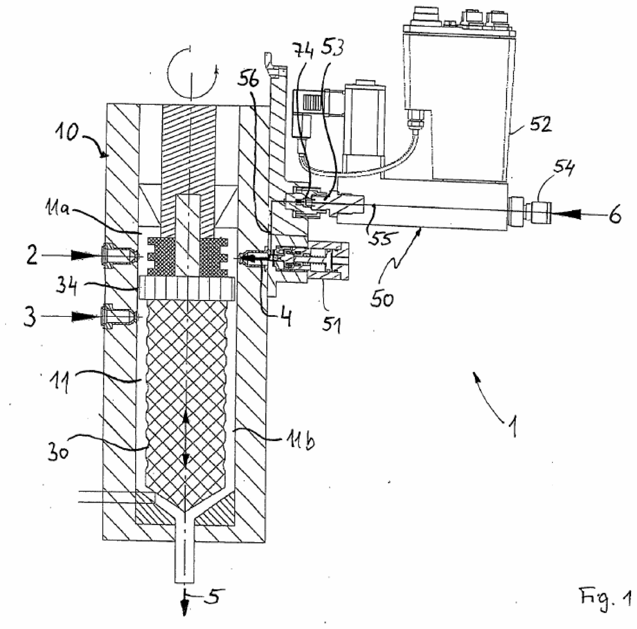

Figur 1 zeigt eine Kunststoff-Dosiervorrichtung, die in ihrer Gesamtheit mit 1 bezeichnet wird. Die Kunststoff-Dosiervorrichtung 1 dient vorzugsweise zum diskontinuierlichen Ausdosieren eines Kunststoffes, der bei der Ausdosierung aus der Kunststoff-Dosiervorrichtung 1 bereits (teilweise) aufgeschäumt ist oder nach der Ausdosierung (weiter) aufschäumt.

Die Kunststoff- Dosiervorrichtung 1 umfasst eine Mischvorrichtung 10 und eine Ventilvorrichtung 50. In die Mischvorrichtung 10 lässt sich eine erste Komponente 2 und eine zweite Komponente 3 einer Mischkammer 11 zuführen, in der ein drehbarer gelagerter Rührer 30 angeordnet ist. In der Mischkammer 11 werden die beiden Komponenten 2, 3 miteinander vermischt, wobei ein Kunststoff 5 entsteht. Beispielsweise kann es sich bei ersten Komponente 2 um ein Gemisch aus Polyol und Wasser handeln, das mit Isocyanat als zweite Komponente 3 in der Mischkammer 11 zu Polyurethan reagiert. Dabei entsteht CO₂, wodurch das Polyurethan aufschäumt bzw. nach dem Ausdosieren aus der Mischkammer 11 (weiter) aufschäumen kann.

Zusätzlich wird der Mischkammer 11 ein Gas 4 zugeführt, dessen Menge genau durch die Ventilvorrichtung 50 geregelt wird. Die Ventilvorrichtung 50 weist dazu ein Druckregelventil 51 und ein Durchflussregler in Form eines Massendurchflussreglers 52 auf, die durch eine Anschlusseinheit 53 miteinander verbunden sind. An einem Einlass 54 des Massendurchflussreglers 52 wird ein unter Druck stehendes Quellgas 6 zugeführt.

Das Gas 4 wird direkt in einen ersten Mischbereich 11a der Mischkammer 11 injiziert und durch den Rührer 30 in der ersten Komponente 2 vermischt bzw. fein zerteilt. Dadurch entstehen kleine Mikroblasen in der ersten Komponente 2. Das Vorgemisch strömt dann über einen Spalt 34 in einen zweiten Mischbereich 11b der Mischkammer 11. Die Mikroblasen begünstigen dabei eine besonders homogene und feine Schaumstruktur, was weiter unten noch ausführlicher beschrieben wird.

Ein Auslass 55 des Massendurchflussreglers 52 ist über die Anschlusseinheit 53 mit einem Einlass 56 des Druckregelventils 51 verbunden.

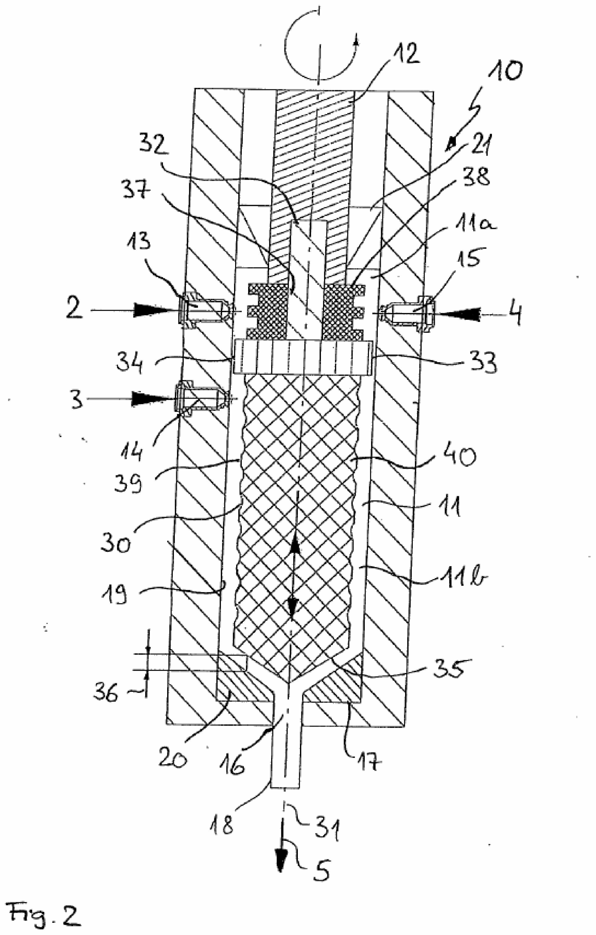

Figur 2 zeigt die Mischvorrichtung 10 in Alleinstellung. Der Rührer 30 ist im Wesentlichen rotationssymmetrisch zu einer Drehachse 31 ausgeführt. Angetrieben wird der Rührer 30 durch eine nur teilweise dargestellte Antriebswelle 12. Zur Verbindung mit der Antriebswelle 12 weist der Rührer 30 einen zapfenförmigen Wellenanschluss 32 auf. Vorzugsweise handelt es sich bei der Verbindung zwischen der Antriebswelle 12 und dem Wellenanschluss 32 um eine kraftschlüssige Verbindung.

In dem Gehäuse der Mischvorrichtung 1 sind drei Einlassöffnungen vorgesehen: zum einen handelt es sich um eine erste Einlassöffnung 13, durch die die erste Komponente 2 der Mischkammer 11 zugeführt werden kann. Eine zweite Einlassöffnung 14 für die zweite Komponente 3 ist in einem axialen Abstand zu der ersten Einlassöffnung 13 vorgesehen. Der axiale Abstand zwischen der ersten Einlassöffnung und der zweiten Einlassöffnung 14 kann wenige Millimeter betragen, beispielsweise 3 bis 20 mm.

Auf gleicher axialer Höhe zu der ersten Einlassöffnung 13 ist eine Gas-Einlassöffnung 15 vorgesehen, durch die das Gas 4 in die Mischkammer 11 eingedüst werden kann. Bei dem Gas 4 handelt es sich vorzugsweise um Luft (das Gas kann auch Stickstoff oder CO₂ sein).

Durch eine Auslassöffnung 16, welche koaxial zur Drehachse 31 angeordnet ist und sich an einem axialen Ende 17 der Mischkammer 11befindet, tritt der Kunststoff bzw. Polyurethanschaum aus der Mischkammer 11. Die Auslassöffnung 16 wird durch eine Düse 18 gebildet. Ein Innendurchmesser der Düse 18 kann beispielsweise 1 bis 8 mm oder 2 bis 5 mm betragen. Eine Länge der Düse 18 kann 2 bis 50 mm oder 30 mm betragen. Der hergestellte Kunststoff tritt in axialer Richtung aus der Mischkammer 11.

Der Rührer 30 weist einen zylindrischen Wellenbund 33 auf, dessen Außendurchmesser etwas kleiner ist als ein Innendurchmesser der zylindrischen Mischkammer 11. Der radiale Spalt 34 zwischen Wellenbund 33 und einer Mischkammerwandung 19 kann als Teil einer Drossel oder Strömungsbremse aufgefasst werden, durch die die Mischkammer 11 in den ersten Mischbereich 11a und den zweiten Mischbereich 11b getrennt wird.

In axialer Richtung (in Richtung der Drehachse 31) lässt sich der Rührer 30 verschieben. Figur 2 zeigt den Rührer 30 in einer axialen Position, in der zwischen einer konischen Rührerspitze 35 des Rührers 30 und einem trichterförmige Einsatz 20, der am axialen Ende 17 der Mischkammer 11angeordnet ist, ein Auslassspalt 36 gegeben ist. Somit ist es möglich, dass der Kunststoff, der in der Mischkammer 11 hergestellt worden ist, durch die Düse 18 aus der Mischvorrichtung 1 treten kann.

In einer Schließposition setzt die konische Rührerspitze 35 auf dem Einsatz 20 auf, wodurch der Auslassspalt 36 verschlossen wird. In der Schließposition des Rührers 30 ist somit die Auslassöffnung 16 verschlossen. Die axiale Ausdehnung des Spalts zwischen der Rührerspitze 35 und dem Einsatz 20 kann Werte zwischen 0 mm (Schließposition) und 2,5 mm annehmen. Die axiale Position des Rührers 30 bzw. die axiale Ausdehnung des Auslassspalts 36 kann für die Einstellung eines bestimmten Drucks in der Mischkammer 11 verwendet werden. Mittel zur genauen Einstellung der axialen Position des Rührers 30 sind in Figur 2 nicht dargestellt.

Der axiale Hub (Differenz zwischen Schließposition und einer oberen Endposition) ist so bemessen, dass der Wellenbund 33 bzw. die Strömungsbremse sich in axialer Richtung gesehen immer zwischen der ersten Einlassöffnung 13 und der zweiten Einlassöffnung 14 befindet. Somit münden die erste Einlassöffnung 13 und die hier in diesem Ausführungsbeispiel um 180° versetzte Gas-Einlassöffnung immer in den ersten Mischbereich 11a der Mischkammer 11. Die zweite Einlassöffnung 14 mündet hingegen unabhängig von der axialen Position des Rührers 30 immer in den zweiten Mischbereich 11b.

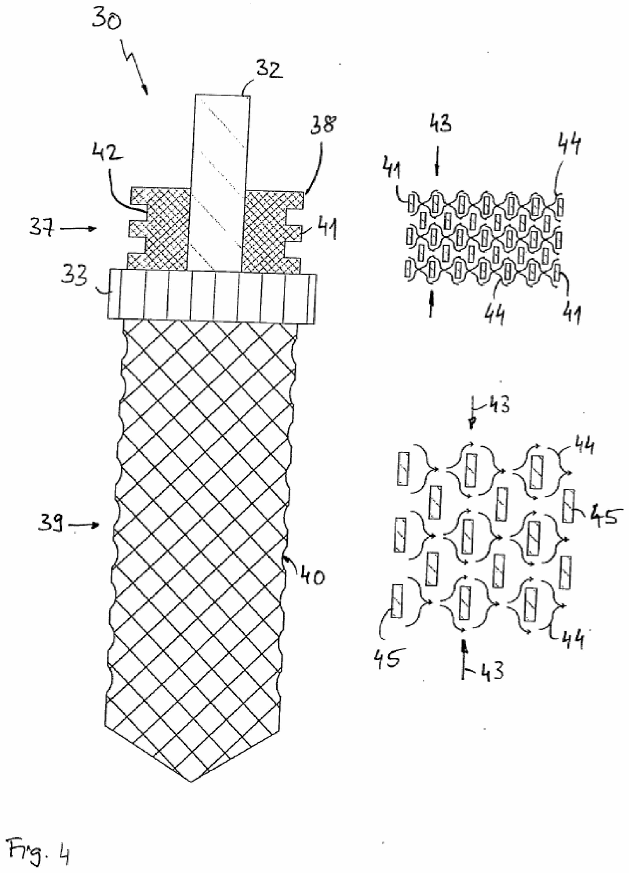

Zur Zerteilung des Gases 4 und/oder zur Vermischung mit der ersten Komponente 2 weist der Rührer 30 an einem ersten axialen Abschnitt 37 erste Mittel 38 auf. Der erste axiale Abschnitt 37 des Rührers 30 liegt in dem ersten Mischbereich 11a der Mischkammer 11. Der erste Mischbereich 11a wird von dem Wellenbund 33 und einer Dichtung 21 begrenzt, die zwischen der Antriebswelle 12 und der Mischkammerwandung 19 eingesetzt ist. In einem zweiten axialen Abschnitt 39, der sich von dem Wellenbund 33 bis zu der Rührerspitze 35 erstreckt, sind zweite Mittel 40 vorgesehen, um ein Vorgemisch, umfassend die erste Komponente 2 und das Gas 4, mit der zweiten Komponente 3 zu vermischen. Der zweite axiale Abschnitt 39 liegt in dem zweiten Mischbereich 11b der Mischkammer 11. Die ersten Mittel 38 und die zweiten Mittel 40 werden anhand der Figuren 4 bis 6 näher beschrieben.

Bevor auf das Druckregelventil 51 der Ventilvorrichtung 50 näher eingegangen wird, soll der Betrieb der Mischkammer 1 anhand der Ausdosierung des Polyurethans bzw. des Polyurethanschaums 5 kurz beschrieben werden: durch die erste Einlassöffnung 13 wird Polyol mit Wasser als erste Komponente 2 dem ersten Mischbereich 11a zugeführt. Gleichzeitig wird durch die Gas-Einlassöffnung 15 Luft in den ersten Mischbereich 11a injiziert. Durch die Drehung des Rührers 30 und damit auch durch Drehung der ersten Mittel 38 wird das injizierte Gas 4 in der ersten Komponente 2 zerteilt. Dadurch entstehen kleine Mikroblasen aus Gas, die in der ersten Komponente 2 fein verteilt vorliegen. Die Drehzahl des Rührers kann 1000 bis 6000 U/min oder 1500 bis 4000 U/min betragen.

Aufgrund des in dem ersten Mischbereich 11a gegebenen Druck gelangt das Vorgemisch aus dem ersten Mischbereich 11a durch den radialen Spalt 34 in den zweiten Mischbereich 11b. Dort wird das Vorgemisch (Polyol, Wasser, Mikroblasen) mit Isocyanat (zweite Komponente 3) durch die zweiten Mittel 40 vermischt. Bei der Reaktion von Polyol, Wasser und Isocyanat ersteht neben dem Polyurethan auch CO₂. Die Mikroblasen fungieren dabei als Keime für die Bildung von CO₂-Blasen, durch die in dem Polyurethan Schaumzellen gebildet werden. Durch die Auslassöffnung 16 kann das Polyurethan aus der Mischkammer 11ausdosiert werden. Aufgrund der Drosselwirkung der Strömungsbremse bzw. des radialen Spalts 34 ergibt sich ein (kleines) Druckgefälle zwischen dem ersten Mischbereich 11a und dem zweiten Mischbereich 11b. Das Druckgefälle sorgt dafür, dass es praktisch keine Strömung von dem zweiten Mischbereich 11b in den ersten Mischbereich 11a gibt. Somit wird vermieden, dass Isocyanat oder ein Gemisch aus Isocyanat, Polyol und Wasser in der ersten Mischbereich 11a gelangt und dort zu unerwünschten Verunreinigungen führt.

Wenn ein Dosiervorgang beendet werden soll, wird der Rührer 30 von der in der Figur 2 gezeigten Position in die Schließposition verschoben, um die Auslassöffnung 16 zu verschließen. Dabei wird die Antriebswelle 12 abgebremst, so dass der Rührer 30 nicht mehr innerhalb der Mischkammer 11 rotiert. Das axiale Absenken der Rührerspitze 35 bis zur Anlage auf dem Einsatz 20 und das Auslaufen des Rührers 30 können dabei so aufeinander abgestimmt sein, dass die Rührerspitze 35 den Einsatz 20 durch eine Restdrehung säubert und freiräumt. Gleichzeitig wird die Ventilvorrichtung 50 geschlossen, um zu verhindern, dass Polyol in die Ventilvorrichtung 50 gelangt oder dass sich in dem ersten Mischbereich 11 zu viel Gas anhäuft. Durch die verschlossene Ventilvorrichtung 51 und die verschlossene Ausgangsöffnung 16 ist die Mischkammer nach Beendigung des Dosiervorgangs von der Umgebung abgeriegelt. Zu Beginn eines weiteren Dosiervorgangs werden wieder die beiden Komponenten 2, 3 und das Gas 4 bei wieder sich drehenden und axial verschobenen Rührer 30 in die Mischkammer eingegeben.

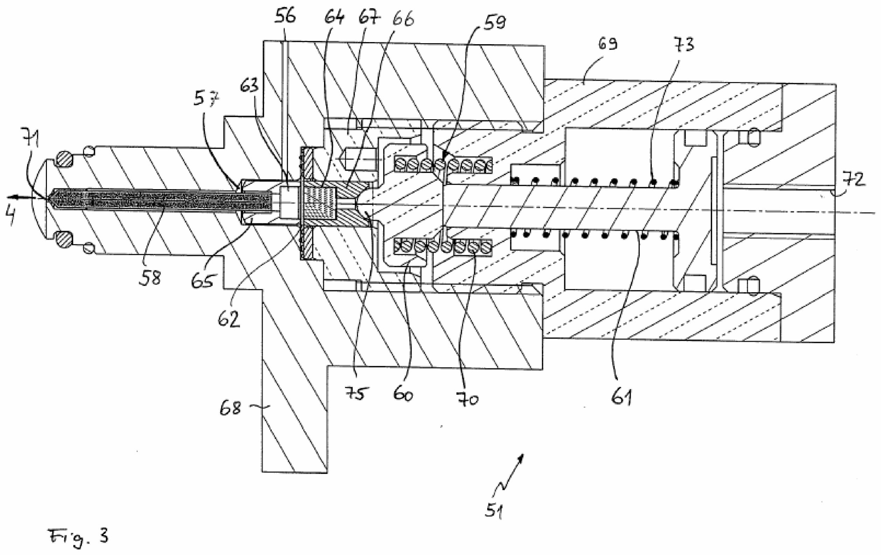

Figur 3 zeigt das Druckregelventil 51 in einem vergrößerten Maßstab. Das Druckregelventil 51 ist als Nadelventil ausgeführt, das eine Ventilkammer 57, eine in der Ventilkammer 57 verschiebbare Nadel 58 sowie eine mit der Nadel 58 gekoppelte Kolbeneinheit 59 aufweist. Die Kolbeneinheit 59 weist einen Druckführungskolben 60 und einen Schließkolben 61 auf. Zwischen der Kolbeneinheit 59 und der Nadel 58 ist eine Membran 62 angeordnet, die die Ventilkammer 57 begrenzt und abdichtet.

Die Kopplung zwischen der Nadel 58 und der Kolbeneinheit 59 erfolgt durch zwei Magnete 63, 64, die als Scheibenmagnete aus Neodym ausgeführt sind. Die Magnetkraft zwischen diesen beiden Magneten wirkt durch die Membran 62. Der Nadel 58 ist über eine Nadelfassung 65 fest mit dem Magnet 63 verbunden. Der Magnet 64 ist in einem Zwischenstück 66 eingesetzt, an der eine Kugelkalotte 75 des Druckführungskolbens 60 anliegt. Durch eine Gewindemuffe 67 ist die Membran 62 in einem Ventilgehäuse 68 fixiert.

Zwischen dem Druckführungskolben 60 und einem axial verstellbaren Widerlager 69 in Form einer Schraubhülse ist eine Schraubenfeder 70 angeordnet, die den Druckführungskolben 60 und somit auch die Nadel 58 in der Darstellung der Figur 3 nach links drückt. Die Kraft, mit der die Schraubenfeder 70 gegen den Druckführungskolben 60 drückt, hängt von der axialen Position der Schraubhülse 69 ab. Die axiale Position lässt sich durch Drehung der Schraubhülse 69 genau einstellen.

Wird die Nadel 58 ganz nach links verschoben, befindet sie sich in einer Schließposition, in der ein Auslass 71 des Druckregelventils 51 verschlossen ist. Über die Membran 62 und das Zwischenstück 66 wirkt auf den Druckführungskolben 60 eine der Kraft der Schraubenfeder 70 entgegengesetzte Kraft, die von dem Druck in der Ventilkammer 57 bzw. von dem Druck am Eingang 56 des Druckregelventils 51 abhängt. Steht der Druckführungskolben 60 im Kräftegleichgewicht, so wird die Nadel 58 innerhalb der Ventilkammer 57 nicht bewegt. Fällt der Druck in der Ventilkammer 57 ab, reduziert sich auch die Kraft, die den Druckführungskolben 60 in der Darstellung der Figur 3 nach rechts drückt. Entsprechend wird durch die nun nicht mehr voll kompensierte Kraft der Schraubenfeder die Nadel 58 nach rechts verschoben, wodurch der Auslass 71 verschlossen wird bzw. der Strömungsquerschnitt am Auslass 71 verkleinert wird. Dies lässt den Druck in der Ventilkammer 57 wieder steigen mit der Folge, dass sich das Kräftegleichgewicht am Druckführungskolben 60 wieder einstellt.

Der Schließkolben 61 dient dazu, den Auslass 71 des Druckregelventils 51 zu verschließen, wenn ein Dosiervorgang der Kunststoff-Dosiervorrichtung 1 und damit auch die Zuführung des Gases 4 beendet werden sollen. In diesem Fall wird der Schließkolben 61 durch eine Luftzufuhr 72 mit Druckluft beaufschlagt, sodass der Schließkolben gegen die Kraft einer weiteren Schraubenfeder 73 gegen den Druckführungskolben 60 drückt. Dadurch wird das ansonsten herrschende Kräftegleichgewicht zwischen dem Druck in der Ventilkammer 57 und der Kraft der Schraubenfeder 70 überstimmt. Die Nadel 58 wird somit unabhängig von dem Druck in der Ventilkammer 57 in die Schließposition bewegt und dort gehalten. Soll aus dem Druckregelventil 51 wieder Gas 4 strömen, wird die Druckluftbeaufschlagung des Schließkolbens 61 beendet. Die Schraubenfeder 73 drückt dann den Schließkolben wieder in eine Ruhestellung, in der der Schließkolben 61 keine Kraft auf den Druckführungskolben 60 ausübt.

Die Anschlusseinheit 53, die zwischen dem Auslass 55 des Massendurchflussreglers 52 und dem Einlass 56 des Druckregelventils 51 angeordnet ist, umfasst ein Rückschlagventil 74 (siehe Figur 1), das den Massendurchflussregler 52 vor einem Eintritt der ersten Komponente 2 schützt, sollte das Druckregelventil 51 beschädigt sein und den Durchfluss der ersten Komponente 2 durch die Ventilkammer 57 nicht verhindern können.

Figur 4 zeigt den Rührer 30 der Figur 2 in Alleinstellung. Zudem zeigt Figur 4 zwei Abwicklungen jeweils eines Teils des Umfangs des Rührers 30.

Die ersten Mittel 38 zum Zerteilen des Gases und zur Erzeugung der Mikroblasen umfassen Vorsprünge oder Zacken 41, die einen rechtwinkligen Querschnitt aufweisen können. Die Vorsprünge 41 erstrecken sich ausgehend von einem zylinderförmigen Kern 42 in radialer Richtung nach außen. Die Vorsprünge 41 mit den rechteckigen Querschnitten, wobei eine längere Kante des rechteckigen Querschnitts sich in axialer Richtung und somit quer zur Umlaufrichtung erstreckt, sind in Reihen angeordnet, die sich in axialer Richtung erstrecken. Der Verlauf einer axialen Reihe wird in dem Teilabschnitt der Abwicklung des Umfangs in Figur 4 durch die Pfeile 43 hervorgehoben. Zu erkennen ist auch, dass die Vorsprünge 41 benachbarter Reihen axial versetzt angeordnet sind. Wenn sich der Rührer 30 dreht und die Vorsprünge 41 so durch die erste Komponente bewegt werden, führt dies zu einer Ausweich- oder Verdrängungsbewegung der ersten Komponente mit dem darin enthaltenen Gas. Die Ausweich- oder Verdrängungsbewegung ist durch die Pfeile 44 schematisch dargestellt. Die ersten Mittel 38 sind als separates Ringelement ausgestaltet, das sich auf den zapfenförmig gestalteten Wellenanschluss 32 aufschieben lässt. Dies vereinfacht die Fertigung des Rührers 30.

Ähnlich zu den ersten Mittel 38 weisen die zweiten Mittel 40 im Querschnitt rechteckige Vorsprünge oder Zacken 45 auf, die in axialen Reihen (siehe Pfeile 43) angeordnet sind. Auch hier ist ein axialer Versatz von Vorsprüngen 45 benachbarter Reihen 43 vorgesehen. Aus Figur 4 wird deutlich, dass die Teilung (Anzahl der Vorsprünge pro Flächeneinheit am Umfang des Rührers 30) im ersten axialen Abschnitt 37 größer ist als die Teilung im zweiten axialen Abschnitt 39. Die Teilung im ersten axialen Abschnitt 37 bezogen auf die Teilung im zweiten axialen Abschnitt kann - unabhängig von der besonderen Anordnung und Ausgestaltung der Vorsprünge 41, 45 der Figur 4 - im Bereich zwischen 2 bis 5 liegen. Die größere Teilung führt zu einer besonders feinen und guten Zerteilung des Gases im ersten Mischbereich. Entsprechend ist die Ausweich- und Verdrängungsbewegung 44 des in dem ersten Mischbereich 11a befindlichen Materials scharfkantiger und filigraner.

Ein weiterer Unterschied zwischen den Vorsprüngen 41 im ersten axialen Abschnitt 37 und den Vorsprüngen 45 des zweiten axialen Abschnitts 39 besteht in der radialen Höhe der einzelnen Vorsprünge. Eine größere Höhe (größere Erstreckung in radialer Richtung) der Vorsprünge 41 fördert im Vergleich zu den eher flachen Vorsprünge 45 eine feine und intensive Vermischung/Zerteilung.

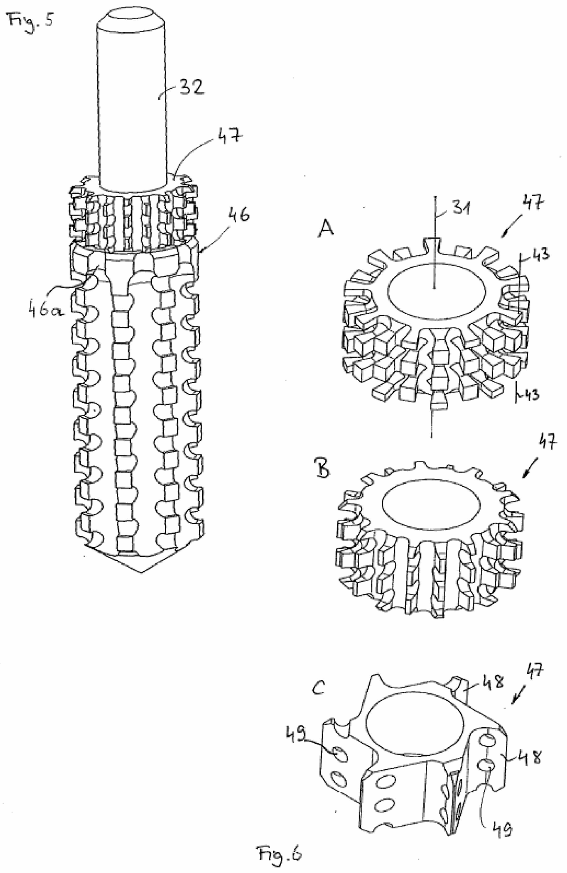

Figur 5 zeigt ein weiteres Ausführungsbeispiel für den Rührer 30. Im Gegensatz zum Wellenbund 33 der Figur 4, der eine glatte zylindrische Mantelfläche aufweist, ist hier ein Wellenbund 46 vorgesehen, der durch axiale Nuten 46a unterbrochen ist. Die Bereiche des Wellenbundes 46 zwischen zwei benachbarten Nuten 46a können auch als Vorsprünge 46b bezeichnet werden, wobei diese gegenüber den Vorsprüngen 41 des ersten axialen Abschnitts 37 und den Vorsprüngen 45 des zweiten axialen Abschnitts 39 in Umfangrichtung breiter ausgeführt sind und in Zusammenspiel mit der angrenzenden Mischkammerwandung 19 (siehe Figur 1) ebenfalls eine Strömungsbremse darstellen, durch die verhindert wird, dass die zweite Komponente in den ersten Mischbereich 11a gelangt. Die verhindernde Wirkung des unterbrochenen Wellenbunds 46 ist dabei geringer als bei dem Wellenbund 33 des Ausführungsbeispiels der Figuren 2 und 4. Jedoch ist dadurch auch das Druckgefälle zwischen dem ersten Mischbereich 11a und dem zweiten Mischbereich 11b geringer.

Figur 5 zeigt zudem, dass die Vorsprünge 41 des ersten axialen Abschnitts durch ein separates Ringelement 47 gebildet werden können, das sich auf den zapfenförmigen Wellenanschluss 32 aufschieben lässt. Dies vereinfacht die Fertigung des Rührers 30.

Die Figur 6 zeigt verschiedene Varianten für das Ringelement 47. Figur 6B zeigt dabei die Variante, wie sie in Figur 5 verwendet wird. Die Vorsprünge 41 laufen radial nach außen spitz zu, so dass die Stirnfläche der Vorsprünge, die der Mischkammerwandung 19 direkt gegenübersteht, relativ klein ist. Dadurch lassen sich die erste Komponente 2 und das Gas 4, welche jeweils radial nach innen zugeführt werden, bei rotierendem Rührer 30 vergleichsweise einfach zuführen. Die Zeitintervalle, in denen bei Drehung des Rührers 30 die Stirnflächen sich direkt gegenüber der jeweiligen Einlassöffnung 13, 15 befinden, sind sehr kurz.

Im Gegensatz dazu vergrößern sich bei der Variante der Figur 6A die Vorsprünge 41 in ihrem Querschnitt, was zu relativ großen Stirn- oder Umfangsflächen pro Vorsprung 41 führt. Bei Drehung des Rührers 30 sind die Zeitanteile, bei denen die Stirnflächen der Vorsprünge 41 den Einlassöffnungen direkt gegenüberstehen, entsprechend größer. Dies erschwert tendenziell das Einführen der ersten Komponente 2 und dem Gas 4. Jedoch weisen die Vorsprünge 41 dadurch in radialer Richtung einen Hinterschnitt auf, der bewirkt, dass bei Drehung des Rührers das entsprechend zu mischende Material nach innen gedrückt wird. Dadurch lassen sich negative Effekte auf eine gute Vermischung reduzieren, die aufgrund von Zentrifugalkräften, die auf das zu vermischende Material einwirken, auftreten können.

Bei den Varianten der Figuren 6A und 6B verlaufen die Reihen 43, der Vorsprünge 41 parallel zur Drehachse 31. Sie könnten aber auch dazu geneigt verlaufen, wodurch das in dem ersten Mischbereich 11a befindliche Material in Richtung Dichtung 21 (siehe Figur 2, also vom Wellenbund 33 weg) gedrückt wird. Dies führt zu einer stärkeren Mischung/Zerteilung in dem ersten Mischbereich 11a.

Figur 6C zeigt eine Variante des Ringelements 47, bei der am Umfang mehrere Schaufeln 48 angeordnet sind. Die Schaufeln 48 drücken das Material in dem ersten Mischbereich 11a zum Inneren der Mischkammer und wirken einer Zentrifugalkraft entgegen. Zu besseren Durchmischung/Zerteilung weisen die Schaufeln kleine Öffnungen 49 auf. Durch diese Öffnungen 49 wird ein Teil des von einer Schaufel erfassten Materials gepresst, was für eine gute Vermischung/Zerteilung förderlich ist. Die axiale Höhe der Öffnungen ist gegenüber der axialen Höhe von Öffnungen einer Nachbarschaufel versetzt. Dadurch lassen sich innerhalb des ersten Mischbereichs 11a etwaige Toträume vermeiden, in denen sich Material absetzen kann, welches nicht optimal vermischt wird.

### Bezugszeichenliste

- 1: Mischkammer
- 2: erste Komponente
- 3: zweite Komponente
- 4: Gas
- 5: Kunststoff (Polyurethanschaum)
- 6: Quellgas

- 10: Mischvorrichtung
- 11: Mischkammer (11a erster Mischbereich; 11b zweiter Mischbereich)
- 12: Antriebswelle
- 13: erste Einlassöffnung
- 14: zweite Einlassöffnung
- 15: Gas-Einlassöffnung
- 16: Auslassöffnung
- 17: axiales Ende
- 18: Düse
- 19: Mischkammerwandung
- 20: Einsatz
- 21: Dichtung

- 30: Rührer
- 31: Drehachse
- 32: zapfenförmiger Wellenanschluss
- 33: Wellenbund
- 34: radialer Spalt
- 35: Rührerspitze
- 36: Auslassspalt
- 37: erster axialer Abschnitt
- 38: erste Mittel
- 39: zweiter axiale Abschnitt
- 40: zweite Mittel
- 41: Vorsprung/Zacken
- 42: Kern
- 43: Reihe
- 44: Ausweich- und Verdrängungsbewegung
- 45: Vorsprung/Zacken
- 50: Ventilvorrichtung
- 51: Druckregelventil
- 52: Durchflussregler/Massendurchflussregler
- 53: Anschlusseinheit
- 54: Einlass des Massendurchflussreglers
- 55: Auslass des Massendurchflussreglers
- 56: Einlass des Druckregelventils
- 57: Ventilkammer
- 58: Nadel
- 59: Kolbeneinheit
- 60: Druckführungskolben
- 61: Schließkolben
- 62: Membran
- 63: Magnet
- 64: Magnet
- 65: Nadelfassung
- 66: Zwischenstück
- 67: Gewindemuffe
- 68: Ventilgehäuse
- 69: Widerlager/Schraubhülse
- 70: Schraubenfeder
- 71: Auslass des Druckregelventils
- 72: Luftzufuhr
- 73: Schraubenfeder
- 74: Rückschlagventil
- 75: Kugelkalotte

## Patentansprüche

1. Verfahren zum vorzugsweise diskontinuierlichen Ausdosieren eines geschäumten oder aufschäumbaren Kunststoffes (5), wobei wenigstens eine erste Komponente (2) zur Bildung des Kunststoffes (5) in eine Mischkammer (11) einer Mischvorrichtung (10) geleitet wird, in der ein um eine Drehachse (31) drehbarer Rührer (30) angeordnet ist, wobei die erste Komponente (2) mit einem Gas (4) zur Beeinflussung der Schaumbildung beladen wird, und wobei der Kunststoff (4) aus der Mischkammer (11) durch eine Ausgangsdüse (18) ausdosiert wird, **dadurch gekennzeichnet, dass** in der Mischkammer (11) ein Druck in einem Bereich von 0,2 bar bis 15 bar vorliegt, wobei das Gas (4) durch eine Ventilvorrichtung (50) in die erste Komponente (2) vorzugsweis direkt in die Mischkammer (11) injiziert wird und der Rührer (30) in der Mischkammer (11) das Gas (5) in der ersten Komponente (2) zerteilt, wobei in die Mischkammer (11) eine zweite Komponente (3) geleitet wird, wobei zwischen der ersten Komponente (2) und der zweiten Komponente (3) eine chemische Reaktion stattfindet und **dadurch gekennzeichnet, dass** die erste Komponente (2) mit der zweiten Komponente (3) vermischt wird, nachdem die Zerteilung des Gases in der ersten Komponente (2) stattgefunden hat.

2. Verfahren nach Anspruch 1, **dadurch gekennzeichnet, dass** die Mischkammer (11) und/oder die Ventilvorrichtung (50) bei einem Dosiervorgang geöffnet wird und zwischen zwei Dosiervorgängen verschlossen wird.

3. Verfahren nach einem der Ansprüche 1 oder 2, **dadurch gekennzeichnet, dass** bei der chemischen Reaktion ein Treibgas freigesetzt wird.

4. Verfahren nach einem der Ansprüche 1 bis 3, **dadurch gekennzeichnet, dass** als Sollgröße für einen Volumenstrom des injizierten Gases (4) bei Umgebungsdruck eine Funktion verwendet wird, die von dem Produkt aus dem Druck in der Mischkammer (11) und der Ausbringmenge des Kunststoffes (5) pro Zeiteinheit abhängig ist.

5. Verfahren nach einem der Ansprüche 1 bis 4, **dadurch gekennzeichnet, dass** die Ventilvorrichtung (50) ein Druckregelventil (51) und einen Durchflussregler (52) vorzugsweise in Form eines Massendurchflussreglers (52) umfasst, wobei ein Ausgang (55) des Massendurchflussreglers (52) mit einem Einlass (56) des Druckregelventils (51) und ein Auslass (71) des Druckregelventils (51) mit der Mischkammer (11) verbunden sind.

6. Verfahren nach Anspruch 5, **dadurch gekennzeichnet, dass** ein Einlass (54) des Massendurchflussreglers (52) mit einem Druck von 4 bis 300 bar, vorzugsweise mit einem Druck von 7 bis 30 bar, beaufschlagt wird.

7. Verfahren nach Anspruch 5 oder 6, **dadurch gekennzeichnet, dass** ein Druck am Auslass (55) des Massendurchflussreglers (52) 5 bis 30 bar beträgt.

8. Verfahren nach einem der Ansprüche 5 bis 7, **dadurch gekennzeichnet, dass** das Druckregelventil (51) eine Nadel (58) und eine damit gekoppelte Kolbeneinheit (59) aufweist, die einen Druckführungskolben (60) und einen Schließkolben (61) umfasst, wobei in einem Druckregelbetrieb der Druckführungskolben (60) vom Schließkolben (61) entkoppelt ist und der Schließkolben (61) gegen den Druckführungskolben drückt, wenn das Druckregelventil (51) geschlossen werden soll.

9. Verfahren nach einem der Ansprüche 5 bis 8, **dadurch gekennzeichnet, dass** der Massendurchflussregler (52) einen kalorimetrischen Durchflussmesser als Messaufnehmer aufweist.

10. Verfahren nach einem der Ansprüche 1 bis 9, **dadurch gekennzeichnet, dass** die Ventilvorrichtung (50) ein als verschließbares Nadelventil ausgeführtes Druckregelventil (51) umfasst.

11. Verfahren nach einer der Ansprüche 1 bis 10, **dadurch gekennzeichnet, dass** die Mischvorrichtung (10) eine Strömungsbremse aufweist, durch die die Mischkammer (11) in einen ersten Mischbereich (11a) und in einen zweiten Mischbereich (11b) getrennt wird.

12. Verfahren nach 11, **dadurch gekennzeichnet, dass** der Rührer (30) einen ersten axialen Abschnitt (37) mit ersten Mitteln (38) zum Zerteilen von Gas in einer Flüssigkeit aufweist und einen zweiten axialen Abschnitt (39) mit zweiten Mitteln (40) zum Vermischen von zwei Flüssigkeiten aufweist.

## Claims

1. A method for metering a foamed or foamable plastics material (5) in a preferably discontinuous manner, wherein at least one first component (2) for forming the plastics material (5) is conveyed into a mixing chamber (11) of a mixing device (10), in which a stirring mechanism (30) that can be rotated about a rotational axis (31) is arranged, the first component (2) being loaded with a gas (4) in order to influence the formation of foam, and the plastics material (4) being metered out of the mixing chamber (11) through an outlet nozzle (18), **characterized in that** the pressure in the mixing chamber (11) ranges from 0.2 bar to 15 bar, the gas (4) being injected into the first component (2), preferably directly into the mixing chamber (11), by a valve device (50), and the stirring mechanism (30) disperses the gas (5) in the first component (2) in the mixing chamber (11), wherein a second component (3) is conveyed into the mixing chamber (11), wherein a chemical reaction takes place between the first component (2) and the second component (3) and **characterized in that** the first component (2) is mixed with the second component (3) after the gas has been dispersed in the first component (2).

2. The method according to claim 1, **characterized in that** the mixing chamber (11) and/or the valve device (50) is opened during a metering process and closed between two metering processes.

3. The method according to one of claims 1 or 2, **characterized in that** a blowing gas is released during the chemical reaction.

4. The method according to one of claims 1 to 3, **characterized in that** a function is used as a setpoint for a volumetric flow of the injected gas (4) at ambient pressure, which function is dependent on the product of the pressure in the mixing chamber (11) and the discharge quantity of the plastics material (5) per unit of time.

5. The method according to one of claims 1 to 4, **characterized in that** the valve device (50) comprises a pressure regulating valve (51) and a flow regulator (52), preferably in the form of a mass flow regulator (52), wherein a drain (55) of the mass flow regulator (52) is connected to an inlet (56) of the pressure regulating valve (51) and an outlet (71) of the pressure regulating valve (51) is connected to the mixing chamber (11).

6. The method according to claim 5, **characterized in that** an inlet (54) of the mass flow regulator (52) is subjected to a pressure of 4 to 300 bar, preferably to a pressure of 7 to 30 bar.

7. The method according to claim 5 or 6, **characterized in that** a pressure at the outlet (55) of the mass flow regulator (52) is 5 to 30 bar.

8. The method according to one of claims 5 to 7, **characterized in that** the pressure regulating valve (51) has a needle (58) and a piston unit (59) coupled thereto which comprises a pressure guide piston (60) and a closing piston (61), wherein, in pressure control operation, the pressure guide piston (60) is decoupled from the closing piston (61) and the closing piston (61) presses against the pressure guide piston when the pressure regulating valve (51) is to be closed.

9. The method according to one of claims 5 to 8, **characterized in that** the mass flow regulator (52) has a calorimetric flow meter as a measuring sensor.

10. The method according to one of claims 1 to 9, **characterized in that** the valve device (50) comprises a pressure regulating valve (51) designed as a closable needle valve.

11. The method according to one of claims 1 to 10, **characterized in that** the mixing device (10) has a flow brake, by means of which the mixing chamber (11) is separated into a first mixing region (11a) and a second mixing region (11b).

12. The method according to 11, **characterized in that** the stirring mechanism (30) has a first axial portion (37) having first means (38) for dispersing gas in a liquid and a second axial portion (39) having second means (40) for mixing two liquids.

## Revendications

1. Procédé pour l'extraction dosée et de préférence discontinue d'une matière plastique (5) moussée ou susceptible de mousser, dans lequel au moins un premier composant (2) pour la formation de la matière plastique (5) est introduit dans une chambre de mélange (11) d'un dispositif de mélange (10) dans laquelle est disposé un agitateur (30) pouvant tourner autour d'un axe de rotation (31), dans lequel le premier composant (2) est chargé d'un gaz (4) permettant d'influencer la formation de mousse, et dans lequel la matière plastique (4) est extraite de manière dosée hors de la chambre de mélange (11) par une buse de sortie (18), **caractérisé en ce qu'**une pression comprise dans une plage allant de 0,2 bar à 15 bar est présente dans la chambre de mélange (11), dans lequel le gaz (4) est injecté par un dispositif à soupape (50) dans le premier composant (2), de préférence directement dans la chambre de mélange (11), et l'agitateur (30) dans la chambre de mélange (11) sépare le gaz (5) dans le premier composant (2), dans lequel un second composant (3) est introduit dans la chambre de mélange (11), dans lequel une réaction chimique a lieu entre le premier composant (2) et le second composant (3), et **caractérisé en ce que**
le premier composant (2) est mélangé au second composant (3) après que la séparation du gaz dans le premier composant (2) a eu lieu.

2. Procédé selon la revendication 1, **caractérisé en ce que** la chambre de mélange (11) et/ou le dispositif à soupape (50) sont ouverts lors d'un processus de dosage et sont fermés entre deux processus de dosage.

3. Procédé selon l'une des revendications 1 ou 2, **caractérisé en ce que** la réaction chimique libère un gaz propulseur.

4. Procédé selon l'une des revendications 1 à 3, **caractérisé en ce qu'**est utilisée comme grandeur de consigne pour un débit volumique du gaz (4) injecté à la pression ambiante une fonction qui dépend du produit de la pression dans la chambre de mélange (11) et du débit de la matière plastique (5) par unité de temps.

5. Procédé selon l'une des revendications 1 à 4, **caractérisé en ce que** le dispositif à soupape (50) comprend une soupape de régulation de pression (51) et un régulateur de débit (52), de préférence sous forme de régulateur de débit massique (52), dans lequel une sortie (55) du régulateur de débit massique (52) est raccordée à une entrée (56) de la soupape de régulation de pression (51) et une sortie (71) de la soupape de régulation de pression (51) est raccordée à la chambre de mélange (11).

6. Procédé selon la revendication 5, **caractérisé en ce qu'**une entrée (54) du régulateur de débit massique (52) est soumise à une pression allant de 4 à 300 bar, de préférence à une pression allant de 7 à 30 bar.

7. Procédé selon la revendication 5 ou 6, **caractérisé en ce qu'**une pression à la sortie (55) du régulateur de débit massique (52) va de 5 à 30 bar.

8. Procédé selon l'une des revendications 5 à 7, **caractérisé en ce que** la soupape de régulation de pression (51) présente un pointeau (58) et une unité à pistons (59) accouplée à celui-ci et comprenant un piston de guidage de pression (60) et un piston de fermeture (61), dans lequel, dans un fonctionnement de régulation de pression, le piston de guidage de pression (60) est désaccouplé du piston de fermeture (61) et le piston de fermeture (61) appuie contre le piston de guidage de pression lorsque la soupape de régulation de pression (51) doit être fermée.

9. Procédé selon l'une des revendications 5 à 8, **caractérisé en ce que** le régulateur de débit massique (52) présente un débitmètre calorimétrique comme capteur de mesure.

10. Procédé selon l'une des revendications 1 à 9, **caractérisé en ce que** le dispositif à soupape (50) comprend une soupape de régulation de pression (51) conçue sous forme de soupape à pointeau pouvant être fermée.

11. Procédé selon l'une des revendications 1 à 10, **caractérisé en ce que** le dispositif de mélange (10) présente un frein d'écoulement par lequel la chambre de mélange (11) est séparée en une première zone de mélange (11a) et en une seconde zone de mélange (11b).

12. Procédé selon 11, **caractérisé en ce que** l'agitateur (30) présente une première section axiale (37) comportant de premiers moyens (38) permettant de séparer du gaz dans un liquide et présente une seconde section axiale (39) comportant de seconds moyens (40) permettant de mélanger deux liquides.
